# EUROPÄISCHE PATENTSCHRIFT

(11) **EP 0 874 950 B1**
(45) Veröffentlichungstag und Bekanntmachung des Hinweises auf die Patenterteilung: **05.04.2000**
(21) Anmeldenummer: 97914043.1
(22) Anmeldetag: 08.01.1997
(51) Int. Cl.: F01D 21/00, F01D 21/04, G01B 11/14

(54) **VORRICHTUNG ZUR ÜBERWACHUNG DES RADIALSPIELS ZWISCHEN TURBINENGEHÄUSE UND SCHAUFELSPITZEN**
DEVICE FOR MONITORING RADIAL GAPS BETWEEN A TURBINE HOUSING AND BLADE TIPS
DISPOSITIF DE CONTROLE DU JEU RADIAL ENTRE UN BOITIER DE TURBINE ET LA POINTE D'AUBES

(30) Priorität: 15.01.1996 DE 19601225
(43) Veröffentlichungstag der Anmeldung: 04.11.1998
(73) Patentinhaber: SIEMENS AKTIENGESELLSCHAFT, 80333 München (DE)
(72) Erfinder: ZÖRNER, Walter, D-91083 Baiersdorf (DE)
(86) Internationale Anmeldenummer: DE9700015
(87) Internationale Veröffentlichungsnummer: WO9726444

(56) Entgegenhaltungen:
- EP-A- 0 353 076
- WO-A-93/17296
- DE-A- 2 730 508
- GB-A- 1 080 726
- US-A- 4 049 644
- US-A- 4 701 053
- US-A- 4 701 610
- NTIS TECH NOTES, SPRINGFIELD, VA, US, Februar 1988, Seite 100 XP000002538 "FIBER-OPTIC LATERAL-DISPLACEMENT SENSOR"

## Beschreibung

Die Erfindung betrifft eine Vorrichtung zur Überwachung eines Radialspalts einer Turbine mit einer Turbinenwelle und an dieser befestigten Turbinenschaufeln, die von einem Turbinengehäuse umgeben sind.

Beim Betrieb einer Turbine, z.B. einer Dampfturbine, können aufgrund betriebsbedingter Beanspruchung des aus Turbinenwelle und Turbinenschaufeln (Lauf schaufeln) aufgebauten Läufers - vorwiegend im Bereich der größten Durchbiegung des Läufers - Radialspiele oder Radialspaltüberbrückungen entstehen. Diese, insbesondere bei hohen Temperaturen auftretenden, Spaltveränderungen werden daher üblicherweise überwacht.

Zur Überwachung von Spalten zwischen Turbinenteilen ist es aus dem Dokument WO 93/17296 bekannt, mittels eines durch das Turbinengehäuse geführten Lichtwellenleiters sowie mit im Turbinengehäuse und/oder in einer Turbinenschaufel angeordneten Prismen Spaltänderungen anhand von Lichtintensitätsänderungen festzustellen. Nachteilig dabei ist jedoch, daß Temperatureinflüsse und Feuchtigkeit des im Spalt vorhandenen Arbeitsmittels, z.B. des Dampfes, zu einem Beschlagen der Prismen und zu einer Verzunderung von Turbinenteilen führen. Aufgrund derartiger Verzunderungen oder Beläge auf den Turbinenteilen ändert sich die Intensität des reflektierten Lichts unabhängig von Spaltänderungen. Somit ist eine genaue und konstante Messung des Radialspaltes nicht gewährleistet. Darüber hinaus ist bisher eine Spaltüberwachung im Randbereich des Läufers nicht vorgesehen.

Aus dem Dokument US-A-4 701 610 ist ein Gerät zum Spaltüberwachung mit zwei Lichtsensoren bekannt, die die Intensität des reflektierten Lichts momentan messen.

Durch Signalverarbeitung der beiden Sensorensignale wird Änderungen der Reflexivität in der Materialoberfläche weitgehend ausgeglichen, und es entsteht ein Signal der die Spaltweite darstellt.

Der Erfindung liegt daher die Aufgabe zugrunde, eine Vorrichtung der eingangs genannten Art derart auszubilden, daß auch bei einer Verzunderung von Turbinenteilen eine sichere und exakte Radialspaltüberwachung ermöglicht ist.

Diese Aufgabe wird erfindungsgemäß gelöst durch die kennzeichnenden Merkmale des Anspruchs 1.

Während zur Ausmessung des Radialspaltes zwischen einer Turbinenschaufel und dem Turbinengehäuse der Meßbezugspunkt auf der Turbinenschaufel angeordnet ist, ist zur Ausmessung des zwischen der Turbinenwelle und dem Turbinengehäuse auftretenden Radialspaltes der Meßbezugspunkt auf der Wellenoberfläche angebracht.

Um einen möglichst konstanten und zuverlässigen Meßbezugspunkt für die Überwachung des Radialspaltes beim Betrieb einer Turbine zu erzielen, besteht das nichtoxidierende Material des Meßbezugspunkts vorzugsweise aus einem verzunderungsbeständigen Material, z.B. aus Chromnickel, aus Platin oder aus Gold.

In vorteilhafter Ausgestaltung ist die Glasfasersonde aus einem Glasfaserbündel aufgebaut. Um die Glasfasersonde ohne ein Aufdecken der Turbine austauschen zu können, ist die Glasfasersonde zweckmäßigerweise lösbar in das Turbinengehäuse einsetzbar, z.B. über ein Gewinde am Meßort.

Um den Radialspalt auch im Bereich hoher Temperaturen, insbesondere im Hochdruckteil einer Dampfturbine, ermitteln zu können, ist die Glasfasersonde zweckmäßigerweise hochtemperaturfest in ein keramikisoliertes Rohr eingesetzt.

Beim Betrieb einer Turbine, insbesondere einer zweischaligen Turbine, treten häufig Durchmesseränderungen des Innen- und/oder Außengehäuses auf. Zur Kompensation derartiger Änderungen ist die Glasfasersonde in einem Bereich zwischen zwei Turbinengehäuseteilen durch einen elastischen Mantel geführt.

Die Glasfasersonde ist somit vorteilhafterweise flexibel und dehnungsbeständig ausgeführt.

Um eine Wellenverlagerung möglichst frühzeitig und exakt feststellen zu können, ist vorteilhafterweise mindestens ein Meßbezugspunkt aus nichtoxidierendem Material auf der Wellenoberfläche im Bereich einer zwischen der Turbinenwelle und dem Turbinengehäuse vorgesehenen Labyrinthdichtung aufgebracht. Zweckmäßigerweise wird dabei eine relative Verlagerung der Turbinenwelle gegenüber dem Turbinengehäuse ermittelt, indem eine Mehrzahl von Glasfasersonden und eine entsprechende Anzahl von Meßbezugspunkten auf der Wellenoberfläche und/oder auf den Turbinenschaufeln vorgesehen sind.

In weiterer vorteilhafter Ausgestaltung ist die Glasfasersonde ist zweckmäßigerweise mit einem Lichtwellensender und - empfänger (Transceiver) verbunden. Dadurch werden Änderungen des Radialspaltes anhand von Änderungen der Lichtverhältnisse am Meßort ermittelt. Zur Bestimmung und Darstellung des Radialspaltverlaufs sowie der Wellenverlagerung ist ein Auswerte- und Diagnosesystem vorgesehen.

Die mit der Erfindung erzielten Vorteile bestehen insbesondere darin, daß durch den Einsatz von nichtoxidierenden Meßbezugspunkten eine konstante und genaue Auswertung sowie eine exakte Diagnose von Radialspalten und/oder Wellenverlagerungen gewährleistet sind. Somit können Beschädigungen sowie Materialverschleiß an den Turbinenschaufeln frühzeitig festgestellt werden. Insbesondere werden Anstreifvorgänge von rotierenden an stehenden Turbinenteilen und daraus resultierende Energieverluste vermieden.

Ausführungsbeispiele der Erfindung werden anhand einer Zeichnung näher erläutert. Darin zeigen:
- Figuren 1 und 2: im Ausschnitt schematisch eine Turbine mit einer Vorrichtung zur Radialspaltüberwachung und
- Figur 3: einen Ausschnitt III aus Figur 1 im größeren Maßstab mit einer durch ein Innengehäuse und ein Außengehäuse geführten Glasfasersonde.

Einander entsprechende Teile sind in allen Figuren mit den gleichen Bezugszeichen versehen.

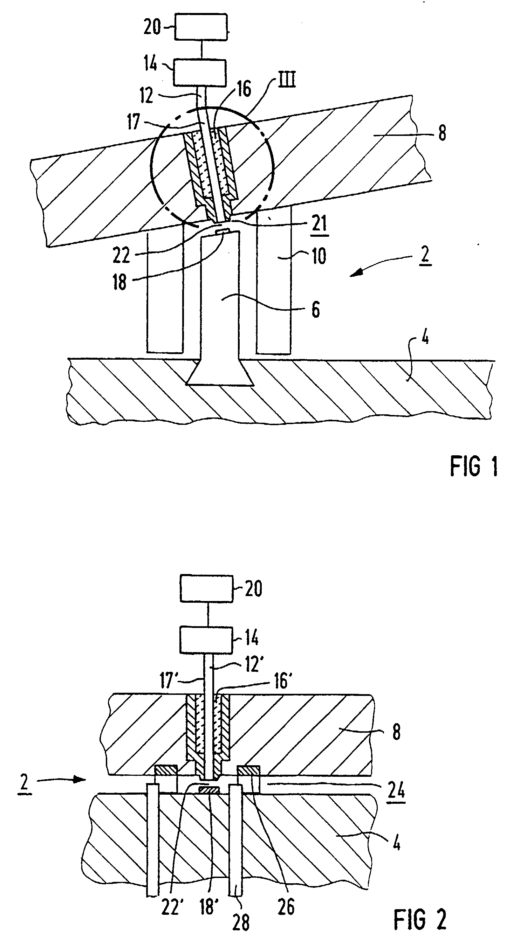

Die Turbine 2 gemäß Figur 1 ist z.B. eine Dampfturbine. Sie umfaßt eine Turbinenwelle 4 mit an dieser befestigten Laufschaufeln 6, die von einem Turbinengehäuse 8 mit an diesen befestigten Leitschaufeln 10 umgeben sind.

Die Vorrichtung zur Radialspaltüberwachung umfaßt eine durch das Turbinengehäuse 8 geführte Glasfasersonde 12, an der ein außerhalb des Turbinengehäuses 8 vorgesehener Lichtwellentransceiver 14 angeschlossen ist. Die Glasfasersonde 12 ist innerhalb des Turbinengehäuses 8 durch ein mit Keramik 16 isoliertes Rohr 17 geführt. Auf die Oberflache des freien Endes der oder jeder Laufschaufel 6 ist ein Meßbezugspunkt 18 aus nichtoxidierendem Material aufgebracht. Das Material des Meßbezugspunkts 18 besteht z.B. aus Chromnickel, Platin oder Gold. Diese Materialien zeichnen sich dadurch aus, daß sie verzunderungsbeständig sind. An den Lichtwellentransceiver 14 ist ein Auswerte- und Diagnosesystem 20 angeschlossen. Das Auswerte- und Diagnosesystem 20 wertet die Änderungen der Lichtverhältnisse am Meßort 21 aus und berechnet den zwischen den Laufschaufeln 6 und dem Turbinengehäuse 8 auftretenden Radialspalt 22.

Die Figur 2 zeigt die Turbine 2 im Bereich einer Labyrinthdichtung 24, die zwischen der Turbinenwelle 4 und dem Turbinengehäuse 8 angeordnet ist. Die Labyrinthdichtung 24 ist zur Abdichtung der Wellendurchführung durch das Turbinengehäuse 8 eingesetzt. Dabei umfaßt die Labyrinthdichtung 24 Dichtungsbänder 26 im Turbinengehäuse 8 und Nuten 28 in der Turbinenwelle 4. Zur Messung des Radialspaltes 22' zwischen dem Turbinengehäuse 8 und der Turbinenwelle 4 ist wiederum ein Meßbezugspunkt 18' aus nichtoxidierendem Material auf der Wellenoberfläche der Turbinenwelle 4 im Bereich zwischen den Nuten 28 angeordnet. Die Glasfasersonde 12' ist ebenfalls innerhalb des Turbinengehäuses 8 durch ein mit Keramik 16' isoliertes Rohr 17' geführt. Sie ist wiederum über den Lichtwellentransceiver 14 mit dem Auswerte- und Diagnosesystem 20 verbunden.

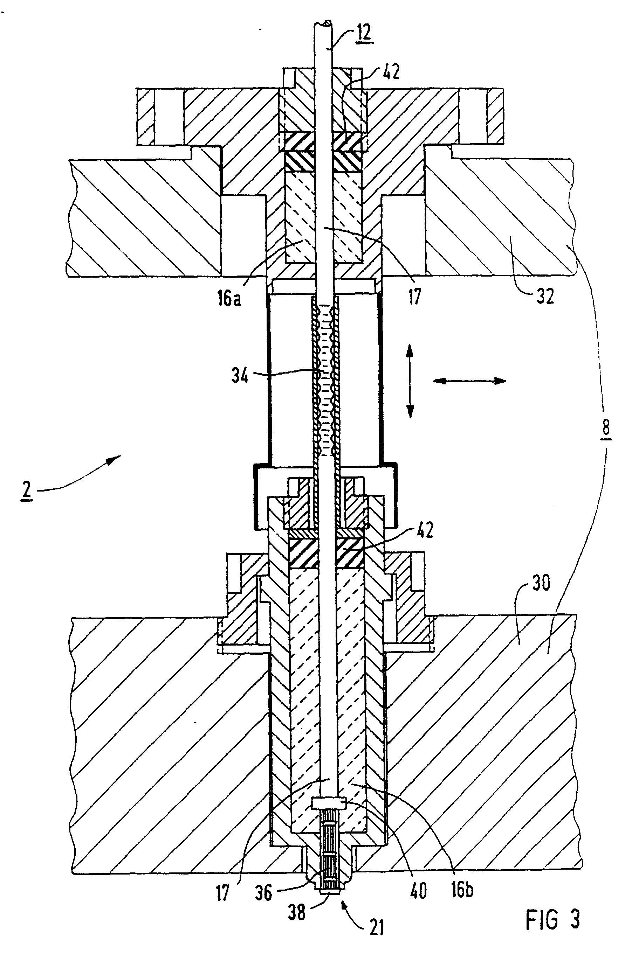

Die Figur 3 zeigt das Turbinengehäuse 8 der Turbine 2 gemäß Figur 1 mit einem Innengehäuse 30 und einem Außengehäuse 32. Dabei ist die Glasfasersonde 12 im Bereich zwischen dem Innengehäuse 30 und dem Außengehäuse 32 durch einen elastischen Mantel 34 zur Kompensation von betriebsbedingten Dehnungen geführt. Zum Schutz gegen hohe Temperaturen ist das Rohr 17 sowohl im Bereich des Innengehäuses 30 als auch im Bereich des Außengehäuses 32 mit Keramik 16a, 16b isoliert. Die Glasfasersonde 12, die in das Rohr 17 eingesetzt ist, ist aus gebündelten Glasfasern 36 aufgebaut. Um die Glasfasersonde 12 vor Feuchtigkeit und Hitze zu schützen, ist am Meßort 21 ein Quarzglas 38, z.B. ein Saphirfenster, angeordnet. Die Glasfasersonde 12 ist im Innengehäuse 30 über ein Gewinde 40 lösbar mit dem eingesetzten Rohr 17 verbunden. Somit ist die Glasfasersonde 12 bei Stillständen der Turbine 2 ohne ein Aufdecken der Turbine 2 über das Außengehäuse 32 herausnehmbar. Zur i Kompensation betriebsbedingter Relativbewegungen zwischen dem Innengehäuse 30 und dem Außengehäuse 32 sind sowohl im Innengehäuse 30 als auch im Außengehäuse 32 über einen Teil der Länge des Rohres 17 Weichdichtungen 42 vorgesehen.

Die betriebsbedingte Beanspruchung des aus Turbinenwelle 4 und Lauf schaufeln 6 aufgebauten Läufers 5 führt zu Radialspalten 22, 22' zwischen dem Turbinengehäuse 8 und dem freien Ende der Lauf schaufeln 6 bzw. der Turbinenwelle 4. Derartige Radialspalte 22, 22' werden mittels den Glasfasersonden 12, 12' sowie mit den auf der Laufschaufel 6 und/oder auf der Wellenoberfläche der Turbinenwelle 4 angeordneten nichtoxidierenden Meßbezugspunkte 18, 18' anhand von Lichtintensitätsdifferenzen und deren Vergleich mit einem Referenzwert bestimmt.

Der Referenz- oder Bezugswert wird während eines Eichvorgangs beim Stillstand der Turbine 2 ermittelt. Dazu werden die Intensitäten zwischen dem vom Lichtwellentransceiver 14 ausgesendeten und dem vom Meßbezugspunkt 18 reflektierten sowie vom Lichtwellentransceiver 14 wieder empfangenen Licht miteinander verglichen. Aus dem Ergebnis dieses Vergleiches wird in dem Auswerte- und Diagnosesystem 20 der Radialspalt 22 und/oder 22' berechnet.

Beim Betrieb der Turbine 2 werden die aktuell erfaßten Intensitätsdifferenzen mit den bei der Referenzmessung ermittelten Intensitätsdifferenzen verglichen. In dem Auswerte- und Diagnosesystem 20 wird aus einer Abweichung der Intensitätsdifferenz der aktuellen Messung von der der Referenzmessung die Änderung und/oder die Größe des Radialspaltes 22, 22' berechnet.

## Patentansprüche

1. Vorrichtung zur Erfassung einer Positionsänderung an einer Turbinenanordnung (2) mit einer Turbinenwelle (4) und/oder an dieser befestigten Turbinenschaufeln (6, 10), die von einem Turbinengehäuse (8) umgeben sind, mit einer durch das Turbinengehäuse (8) geführten Glasfasersonde (12),
**gekennzeichnet durch** einen auf der Oberfläche mindestens einer Turbinenschaufel (6, 10) und/oder auf der Oberfläche der Turbinenwelle (4) aufgebrachten Meßbezugspunkt (18) aus nichtoxidierendem Material zur Reflexion von Licht aus der Glasfasersonde (12) und durch Mittel zur Erfassung von Intensitätsdifferenzen im reflektierten Licht und durch Mittel zum Vergleich einer Intensitätsdifferenz mit einem zeitlich vorher ermittelten Referenzwert.

2. Vorrichtung nach Anspruch 1,
**dadurch gekennzeichnet,** daß das nichtoxidierende Material des Meßbezugspunkts (18) verzunderungsbeständig ist.

3. Vorrichtung nach Anspruch 1 oder 2,
**dadurch gekennzeichnet,** daß die Glasfasersonde (12) aus einem Glasfaserbündel (36) aufgebaut ist.

4. Vorrichtung nach einem der Ansprüche 1 bis 3,
**dadurch gekennzeichnet,** daß die Glasfasersonde (12) lösbar in das Turbinengehäuse (8) einsetzbar ist.

5. Vorrichtung nach einem der Ansprüche 1 bis 4,
**dadurch gekennzeichnet,** daß die Glasfasersonde (12) in ein mit Keramik (16) isoliertes Rohr (17) eingesetzt ist.

6. Vorrichtung nach einem der Ansprüche 1 bis 5,
**dadurch gekennzeichnet,** daß die Glasfasersonde (12) in einem Bereich zwischen zwei Turbinengehäuseteilen (30, 32) durch einen elastischen Mantel (34) geführt ist.

7. Vorrichtung nach einem der Ansprüche 1 bis 6,
**gekennzeichnet durch** einen Lichtwellentransceiver (14), der mit der Glasfasersonde (12) verbunden ist.

8. Vorrichtung nach einem der Ansprüche 1 bis 7,
**dadurch gekennzeichnet,** daß mindestens ein Meßbezugspunkt (18) aus nichtoxidierendem Material auf der Wellenoberfläche im Bereich einer zwischen der Turbinenwelle (4) und dem Turbinengehäuse (8) vorgesehenen Labyrinthdichtung (24) aufgebracht ist.

9. Vorrichtung nach einem der Ansprüche 1 bis 8,
**dadurch gekennzeichnet,** daß eine Mehrzahl von Glasfasersonden (12) und eine entsprechende Anzahl von Meßbezugspunkten (18) auf der Wellenoberfläche (4) und/oder auf den Turbinenschaufeln (6, 10) zur Messung einer Wellenverlagerung vorgesehen sind.

10. Vorrichtung nach einem der Ansprüche 1 bis 9,
**gekennzeichnet durch** ein Auswerte- und Diagnosesystem (20) zur Bestimmung und Darstellung des Radialspaltverlaufs sowie einer Wellenverlagerung.

## Claims

1. Device for recording a change in position at a turbine arrangement (2) having a turbine shaft (4) and/or turbine blades (6, 10), which are secured to the latter and which are surrounded by a turbine casing (8), by means of a glass fibre probe (12) which is guided through the turbine casing (8), characterised by a measurement reference point (18) of non-oxidizing material that is applied to the surface of at least one turbine blade (6, 10) and/or to the surface of the turbine shaft (4) for reflecting light from the glass fibre probe (12) and by means for recording differences in intensity in the reflected light and by means for comparing a difference in intensity with a reference value determined at a previous time.

2. Device according to claim 1, characterised in that the non-oxidizing material of the measurement reference point (18) is resistant to scaling.

3. Device according to claim 1 or 2, characterised in that the glass fibre probe (12) is composed of a glass fibre bundle (36).

4. Device according to one of claims 1 to 3, characterised in that the glass fibre probe (12) can be inserted into the turbine casing (8) in a releasable manner.

5. Device according to one of claims 1 to 4, characterised in that the glass fibre probe (12) is inserted into a tube (17) which is insulated with ceramics (16).

6. Device according to one of claims 1 to 5, characterised in that the glass fibre probe (12) is guided through an elastic jacket (34) in a region between two turbine casing parts (30, 32).

7. Device according to one of claims 1 to 6, characterised by a light wave transceiver (14) which is connected to the glass fibre probe (12).

8. Device according to one of claims 1 to 7, characterised in that at least one measuring reference point (18) of non-oxidizing material is applied to the shaft surface in the region of a labyrinth seal (24) which is provided between the turbine shaft (4) and the turbine casing (8).

9. Device according to one of claims 1 to 8, characterised in that a plurality of glass fibre probes (12) and a corresponding number of measurement reference points (18) are provided on the shaft surface (4) and/or on the turbine blades (6, 10) for the purpose of measuring shaft displacement.

10. Device according to one of claims 1 to 9, characterised by an evaluation and diagnostic system (20) for determining and representing the radial gap profile and also shaft displacement.

## Revendications

1. Dispositif de détection d'une variation de position sur une turbine (2) comprenant un arbre (4) de turbine et/ou des aubes (6, 10) de turbine fixées à cet arbre et entourées par une enveloppe (8) de turbine, par une sonde (12) à fibre de verre qui passe dans l'enveloppe (8) de turbine,
caractérisé par un point (18) de référence de mesure, en matériau qui ne s'oxyde pas, qui est déposé à la surface d'au moins une aube (6, 10) de turbine et/ou à la surface de l'arbre (4) de turbine, et qui est destiné à réfléchir de la lumière de la sonde (12) à fibre de verre, et par des moyens pour relever les différences d'intensité de la lumière réfléchie, et par des moyens pour comparer une différence d'intensité à une valeur de référence déterminée précédemment.

2. Dispositif suivant la revendication 1, caractérisé en ce que la matière du point (18) de référence de mesure qui ne s'oxyde pas, résiste à la calamine.

3. Procédé suivant la revendication 1 ou 2,
caractérisé en ce que la sonde (12) en fibre de verre est constituée d'un faisceau (36) de fibres de verre.

4. Procédé suivant l'une des revendications 1 à 3,
caractérisé en ce que la sonde (12) de fibre de verre peut être montée de manière amovible dans l'enveloppe (8) de turbine.

5. Procédé suivant l'une des revendications 1 à 4,
caractérisé en ce que la sonde (12) de fibre de verre est insérée dans un tube (17) isolé par de la céramique (16).

6. Procédé suivant l'une des revendications 1 à 5,
caractérisé en ce que la sonde (12) en fibre de verre passe dans une gaine (34) élastique, dans une région comprise entre deux parties (30, 32) de l'enveloppe de turbine.

7. Procédé suivant l'une des revendications 1 à 6,
caractérisé par un récepteur (14) d'ondes lumineuses, qui est relié à la sonde (12) de fibre optique.

8. Procédé suivant l'une des revendications 1 à 7,
caractérisé en ce qu'au moins un point (18) de référence de mesure, en une matière qui ne s'oxyde pas, est disposé à la surface de l'arbre dans une région d'une étanchéité (24) à labyrinthe prévue entre l'arbre (4) de la turbine et l'enveloppe (8) de la turbine.

9. Procédé suivant l'une des revendications 1 à 8,
caractérisé en ce qu'il est prévu une pluralité de sondes (12) de fibre de verre et un nombre correspondant de points (18) de référence de mesure à la surface (4) de l'arbre et/ou sur les aubes (6, 10) de la turbine pour la mesure d'un déplacement de l'arbre.

10. Procédé suivant l'une des revendications 1 à 9,
caractérisé par un système (20) d'exploitation et de diagnostic, destiné à déterminer et à représenter la courbe du jeu radial ainsi qu'un déplacement de l'arbre.
